# EUROPEAN PATENT APPLICATION

(11) **EP 2 055 465 A1**
(43) Date of publication of application: **06.05.2009**
(21) Application number: 08168151.2
(22) Date of filing: 03.11.2008
(51) Int. Cl.: B29C 70/52

(54) **Method for manufacturing profiles, tubes and plates**

(30) Priority: 02.11.2007 FI 20075781
(71) Applicant: Exel Oyj, 01510 Vantaa (FI)
(72) Inventor: Juselius, Jukka, 01630 Vantaa (FI)
(74) Representative: LEITZINGER OY

(57) **Abstract**

The invention relates to a method for manufacturing profiles, tubes or boards by means of pultrusion or a continuous laminating technique of reinforced plastic. In the method, the product is made of resin-impregnated continuous fibre reinforcements which are guided into a shape corresponding to the cross-section of the product being manufactured. At least a part of the fibre reinforcements are continuous carbon fibres. The carbon nanotubes are typically used in an amount of less than 1%, preferably 0,05%-0,5%, of the weight of the resin.

## Description

The invention relates to a method for manufacturing profiles, tubes or boards by means of pultrusion or a continuous laminating technique of reinforced plastic, in which method the product is made of resin-impregnated continuous fibre reinforcements which are guided into a shape corresponding to the cross-section of the product being manufactured and of which fibre reinforcements at least a part are continuous carbon fibres.

Pultrusion or a continuous laminating technique is used to manufacture carbon composite products for various uses. The advantage of a continuous manufacturing technique is good production capacity. Despite the good strength properties of carbon composite products, products that are even stronger with respect to their weight are required for various applications.

The aim of the invention is to provide a continuous method, by means of which can be manufactured carbon composite products with improved strength properties.

This aim is achieved by means of the method according to the invention by impregnating the fibre reinforcements with resin containing carbon nanotubes before the fibre reinforcements are guided into shape.

Carbon nanotubes are a new material group, which is also used in plastic composites, for example, in sports equipment to provide improved mechanical properties, for example, in tennis racket frames or bicycle handlebars. These known products are not, however, made continuously by pultrusion or a continuous laminating technique. Carbon composite products containing carbon nanotubes and made by pultrusion or a continuous laminating technique according to the invention are suitable for reinforcing various types of structures, because the carbon nanotubes contained in the resin give the product increased bending strength, rigidity, impact strength and fatigue strength.

Carbon nanotubes are used, for example, by compounding them by known methods with epoxies, vinyl esters and urethane resins or by integrating them in the molecular structure of resin. The number of carbon nanotubes and the resin type are selected to provide an optimal reaction, structure and processability. Carbon nanotubes are used in an amount of less than 1%, preferably 0,05%-0,5%, of the weight of the resin, depending on the structure of the product, the compounding ratio of the materials and the applications of use.

The manufacture of a product is carried out by impregnating the continuous fibre reinforcements with resin containing carbon nanotubes, which fibres are guided into the desired cross-sectional shape of the product and processed by means of known continuous processes, such as pultrusion or continuous lamination.

Products manufactured by compounding with carbon nanotubes or integrating with resin systems can mainly improve bending strength, by as much as 25%, impact strength (+25%) and fatigue strength (10-30%). The improvement of the strength properties will depend to a great extent on the fibre structure and the fibre and resin types.

Applications of products manufactured according to the method of the invention include windmill vane reinforcements, reinforcements for bridges, buildings and other load-bearing structures and machine parts requiring exceptional fatigue strength, such as machine rolls. As applications of tubular products could be mentioned ski poles, shafts of sticks, such as the shafts of floorball sticks, surfboard masts and sailboat masts. As applications of board-like or flat products (or profiles) can be mentioned the reinforcement laminates of snowboards, skateboards, skis and ice-hockey sticks. The products may also include other sports equipment made by pultrusion or continuous lamination. The boards made by the method according to the invention may also be used as reinforcements for wood panels, such as plywood.

## Claims

1. A method for manufacturing profiles, tubes or boards by means of pultrusion or a continuous laminating technique of reinforced plastic, in which method the product is made of resin-impregnated continuous fibre reinforcements which are guided into a shape corresponding to the cross-section of the product being manufactured and of which fibre reinforcements at least a part are continuous carbon fibres, **characterised in that** the fibre reinforcements are impregnated with resin containing carbon nanotubes before the said guiding into shape.

2. A method according to claim 1, **characterised in that** the carbon nanotubes are used in an amount of less than 1%, preferably 0,05%-0,5% of the weight of the resin.

3. A method according to claim 1 or 2, **characterised in that** the resin used is an epoxy, vinyl ester or urethane resin compounded with carbon nanotubes or integrated in the molecular structure of resin.

4. An application of use of a product manufactured by a method according to any of the claims 1 to 3, **characterised in that** the product is used for reinforcing the vanes of windmills.
